# EUROPEAN PATENT APPLICATION

(11) **EP 4 216 548 A1**
(43) Date of publication of application: **26.07.2023**
(21) Application number: 22152167.7
(22) Date of filing: 19.01.2022
(51) Int. Cl.: H04N 19/186, H04N 19/117, H04N 19/70, H04N 19/85, G06T 9/00

(54) **METHOD AND SYSTEM FOR TRANSMITTING SATELLITE IMAGE DATA VIA A DATA NETWORK**

(71) Applicant: EarthStreamer GmbH, 6020 Innsburck (AT)
(72) Inventor: KAPFERER, Wolfgang, 6020 Innsbruck (AT)
(74) Representative: Grünecker Patent- und Rechtsanwälte PartG mbB

(57) **Abstract**

The invention provides a computer-implemented method for transmitting satellite image data via a data network, comprising storing satellite image data corresponding to different acquisition times and/or different observed areas in a first data storage, selecting satellite image data to be transferred via the data network, compressing, using a video codec, the selected satellite image data based on a video coding format to form a video stream, and transmitting the video stream via the data network to a second data storage.

## Description

### Field of the invention

The invention relates to a method and a system for transmitting satellite image data, in particular from earth observation satellites, via a data network.

### Background

State-of-the-art satellite sensor imagery data does have many drawbacks when it comes to data access and utilization, in particular in view of the data volume. Especially time series of satellite data with hundreds or even thousands of terabytes of data demand large investments in accessing and preparing data for the actual value-adding task of domain specific data analysis.

Global scale satellite sensor data from a single mission in the regime of high to very high resolution (less than 30 meter per pixel) with high value precision (16 bit) particularly leads to archives of several petabytes of raw data per year.

The satellite sensor data is typically stored as georeferenced raster data files (e.g., GeoTIFF files). Typically, the raster files are lossless compressed with compression algorithms such as JP2000 (Wavelet) or LZW (Lempel-Ziv-Welch). These files are stored for each band and observation in a container format such as a ZIP-container, together with metadata about mission details.

For using the satellite data, satellite imagery data typically needs to be moved through networks. An interested user in satellite imagery data usually starts with a geometry representing the region of interest and a time or time-range. With this information, archives are crawled and the corresponding file containers are delivered as download list. After the access to the data archive is established, the typical workflow includes downloading the data and unpacking the containers to access the data in applications.

Apparently, the download of the data forms a significant bottleneck in data processing. In certain areas of the world, the available network infrastructure is simply not sufficient to retrieve the required data in a reasonable amount of time. Thus, the possibility of leveraging the satellite data in such areas is significantly limited.

In view of these problems, it is an object of the invention to provide an improved method and system for transmitting satellite image data via a data network, which particularly allow a more efficient utilization of network resources.

### Summary of the invention

This object is achieved by a method according to claim 1 and a system according to claim 13. Preferred embodiments are listed in the dependent claims.

The invention particularly provides a computer-implemented method for transmitting satellite image data via a data network, comprising storing satellite image data corresponding to different acquisition times and/or different observed areas in a first data storage, selecting satellite image data to be transferred via the data network, compressing, using a video codec, the selected satellite image data based on a video coding format to form a video stream, and transmitting the video stream via the data network to a second data storage.

The use of a video stream to transmit the satellite image data via the data network allows for shortening the download times significantly. Particularly, it allows for leveraging widely spread decoding technologies built in numerous devices, such as smartphones, tablets, laptops or workstations. In other words, the invention allows users to access satellite image data with commodity hardware and software established by the entertainment industry. In this way, satellite data can also be used efficiently in regions with low network bandwidths.

The satellite image data may particularly comprise sensor data obtained by one or more image sensors of the satellite. The sensor data may particularly correspond to two-dimensional raster or pixel data. The raster or pixel data obtained at a specified acquisition time of a specified observed area is referred to herein as "satellite image". In other words, the satellite image data may comprise a plurality of satellite images. The satellite image data may further comprise metadata corresponding to the sensor data.

The frames of the video stream, after the compression step, may each comprise raster data or, in other words, the frames of the video stream may comprise the satellite images.

The data network may be any kind of telecommunication network. The data network may be a wired network, a wireless network or a combination thereof. The data network may be used to connect a plurality of computer systems, in particular two or more computer systems, thereby forming a computer network. The first data storage may be part of a first computer system and the second data storage may be part of a second computer system, different and remote from the first computer system. The data network may be a Wide Area Network, WAN, a Metropolitan Area Network, MAN, or a Local Area Network, LAN. The data network may particularly comprise or correspond to the Internet. The data network may also comprise or correspond to a satellite link. In other words, the steps of the described method may also be performed by a computer system of a satellite. The video stream may then be transmitted via the satellite link to a ground segment or earth station.

The first and second data storages may each be any kind of data storage suitable for at least temporarily storing data. The first and second data storages may each be volatile or non-volatile memory. The capacity of the first and second data storages may each be chosen sufficiently to store the satellite image data and the video stream, respectively, thereon.

Contrary to known video streaming applications, the transmitted video stream may be permanently and fully stored on the second data storage. It is, however, also possible that the second data storage only forms a buffer memory and that the transmitted satellite image data is only displayed as streaming media.

The video codec may particularly relate to a software and/or hardware encoder. The video coding format used by the video codec is not particularly limited. The video coding format may support at least 10, in particular at least 12 bit of bit depth. In this way, it is possible to compress 16 bit raw material, as usual for satellite sensor data with low loss.

The video coding format may support lossless compression. In this way, an optimum data quality may be maintained while using the network resources efficiently.

The video stream obtained by the video codec may correspond to a video bit stream obtained by compression based on the video coding format and encapsulated in a container format. Examples for suitable container formats are Matroska (.mkv), its derived WebM format (.webm) or the Indeo Video File (IVF) format.

The satellite image data may originate from one or more satellite sensors, in particular from one or more sensors of an earth observation satellite. Each satellite image may comprise pixel data corresponding to intensity values in a predetermined spectral band. The method may comprise storing satellite image data corresponding to different spectral bands, in particular sets of satellite images of the same observed area and the same acquisition time but for different spectral bands. Such data is available from multispectral, hyperspectral and/or synthetic aperture radar satellite missions. It is also possible to store the pixel data for the different spectral bands in a single satellite image. In this case, each pixel has associated therewith two or more intensity values corresponding to two or more spectral bands.

The satellite image data, in particular each satellite image, may correspond to one or more predetermined granules of a fixed or variable grid relative to the earth surface. In other words, the satellite image data stored in the first data storage may be based on a projection of the original satellite sensor data from the satellite orbit onto a fixed or variable grid relative to the earth surface. This is particularly relevant for satellite missions with variable orbits, such as monitoring missions like the Sentinel Mission of the European Space Agency, ESA. Each granule of the fixed or variable grid may be defined by the geographic coordinates of its boundaries. For a fixed grid, the geometry of the granules may be constant, while the geometry of the granules of the variable grids may have a spatial variance.

Each pixel of the raster data, also referred to as "cell", thus, may also be related to predetermined geographic coordinates. In this way, it is possible to correlate each sensor data point to a specific area on the earth surface.

The satellite image data, in particular each satellite image, may be associated with stored metadata, the metadata particularly specifying the acquisition time of the data and/or the observed area. The observed area may be specified by specifying the one or more granules of the fixed or variable grid to which the satellite image relates and/or by geographic coordinates defining the boundaries of the one or more granules.

The degree of compression for the video stream may be selectable. In this way, an adaptation to the available network resources is possible. The method may particularly comprise coding a plurality of video streams with different degree of compression by compressing, using the video codec, the selected satellite image data based on different degrees of compression and storing the plurality of video streams on a data storage, for instance the first data storage. A user requesting the data may then select a degree of compression based on the available network bandwidth. Transmitting the video stream may then comprise transmitting the video stream corresponding to the selected degree of compression.

The method may further comprise measuring the available bandwidth and calculating estimated download times based on the measured bandwidth. The estimated download times may be presented to the user requesting the data, who may chose the appropriate degree of compression based thereon.

Selecting the satellite image data may comprise selecting a time series of satellite images for a predetermined observation region of interest and/or selecting satellite images corresponding to a predetermined observation region of interest independent of the acquisition times of the satellite images. When encoding a time series, it is possible to easily analyze the data at distinct time-markers within the video stream or to scan a satellite archive in a fast and easy manner. On the other hand, by encoding satellite image data corresponding to a predetermined observation region, the transmitted data may be used to build a comprehensive archive for a given observation region of interest.

Selecting the satellite image data may comprise selecting satellite image data from a single satellite mission, in particular of a single sensor instrument of a satellite mission. In this way, comparable temporal data of the observation area of interest can be obtained.

Compressing the selected satellite image data may be based on a lossless or lossy compression algorithm using a selectable compression factor. While a lossless compression algorithm allows for maintaining the original data, a selectable compression factor allows for a variable degree of compression. In particular, selecting a degree of compression for the video stream as disclosed herein above may comprise selecting a compression factor for a compression algorithm. The compression factor may be chosen from a range between (and including) 1:10 and 1:100.

The method may further comprise, for one or more frames of the video stream, mapping a satellite image corresponding to one sensor spectral band, to two or more channels of a color space provided for by the video coding format. In this way, for instance, 16-bit sensor data may be mapped onto the available color-space channels of a frame, allowing maintaining the original precision. For instance, the video coding format may provide three color channels, each supporting a bit depth of 8 - 12 bit. In this case, the image data corresponding to one sensor spectral band having a bit depth of 16 bit may be mapped to three color channels. In the video stream, for each frame, a satellite image corresponding to one sensor spectral band may be mapped to two or more channels of a color space provided for by the video coding format.

The method may alternatively or additionally comprise, for one or more frames of the video stream, in particular for each frame, mapping one or more satellite images corresponding to two or more sensor spectral bands, to respective two or more channels of a color space provided for by the video coding format. In this way, for instance, each of the original 16-bit sensor data of a sensor spectral band may be mapped into an 8 to 12-bit representation of a respective color channel. This mapping leads to a reduced signal quality. However, the information from two or more sensor spectral bands can be included in each frame of the video stream. As detailed herein above, a satellite image may be associated with data from two or more sensor spectral bands. The data for each sensor spectral band may be mapped to a different channel. Alternatively or additionally, data for sensor spectral bands mapped to different channels may originate from different satellite images.

Compressing the selected satellite image data, thus, may further comprise converting the selected satellite images having a first bit depth to image data having a second bit depth supported by the video coding format.

The method may further comprise computing one or more indices, each index being based on a combination of one or more satellite images and corresponding to two or more sensor spectral bands, and mapping the one or more indices to one or more respective channels of a color space provided for by the video coding format. With such an approach, fast solutions for specific domains, e.g., agriculture, can be provided. Typically, sensor data in land monitoring satellite imagery is analyzed in band ratios, such as the NDVI-Index (Normalized Difference Vegetation Index). Special indices streams can be provided for different market specific purposes. For instance, an index may comprise a difference, a sum, a multiplication and/or a ratio of satellite sensor data of two or more sensor spectral bands.

The method may further comprise mapping satellite images originating from two or more different sensors, in particular of different satellite missions (particularly including optical and radar), to respective two or more channels of a color space provided for by the video coding format. In this way, the efficient network utilization possible by the use of video streams can be leveraged also apart from time series to transfer unrelated or only marginally related data.

The method may further comprise identifying data gaps in the selected satellite image data caused by projecting the satellite sensor data onto a fixed or variable grid relative to the earth surface and replacing the no-data values in the data gaps by pixel values obtained based on earlier and/or later observations of the area corresponding to the data gaps. In this way, it is possible to avoid incomplete frames and to obtain are more consistent understanding of the observation area of interest.

In this case, the method may further comprise adding, as metadata, information to the video stream, indicating the different areas within a frame and the corresponding acquisition times.

As used herein, the "observation area of interest" refers to an area, in particular of the earth surface, specified by a requesting user or data administrator, for which satellite image data, in particular a time series of satellite images, shall be provided.

The no-data values in the data gaps may particularly be replaced by pixel values of the last recent observation of the observed area corresponding to the data gap. In this case, the metadata may indicate for the replacing pixel values the acquisition time of the last recent observation.

Alternatively, the no-data values in the data gaps may be replaced by pixel values obtained by interpolation, in particular by linear or higher order interpolation, of observations of the observed area corresponding to the data gap before and after the acquisition time of the satellite image with the data gap. In this case, the metadata may indicate for the replacing pixel values an interpolated acquisition time based on the acquisition times of the observations used to calculate the replacing pixel values.

As a further alternative, the no-data values in the data gaps may be replaced by pixel values obtained by extrapolation of one or more earlier observations of the observed area corresponding to the data gap. This is particularly useful for the latest observation where no interpolation is possible. The extrapolation may particularly be based on several earlier observations. In this way, the accuracy can be increased. In this case, the metadata may indicate for the replacing pixel values an extrapolated acquisition time based on the acquisition times of the observations used to calculate the replacing pixel values.

Prior to or after selecting the satellite image data, the method may further comprise projecting the satellite images into a predetermined reference system using a predetermined map projection, in particular wherein the predetermined reference system is selected based on the observation area of interest. As satellite imagery is representing a two-dimensional space on a three-dimensional globe, a projection of the data is necessary to create maps of the observation area of interest. By using a map projection selected based on the observation area of interest, local distortions can be minimized.

The method may comprise adding metadata relating to observation parameters of the satellite images to the video stream. The metadata may particularly identify the acquisition time and the observed area for each frame of the video stream. If a frame comprises sensor data relating to different acquisition times and/or observed areas, the metadata may be chosen such that for each part of the frame the corresponding acquisition time and observed area can be derived. This may be the case, for instance, if data gaps are filled, as detailed above, or if the color channels of a frame contain sensor data from different sensors or even different satellite missions, as also detailed herein above.

The metadata may particularly be stored as a key-value section in the header of the video stream. In this way, the list of metadata may be easily expanded with individual key-value pairs. A database with all metadata for the video streams may be provided, in particular with an Application Programming Interface, API, to access the data.

For simple applications, it is conceivable that no metadata relating to observation parameters of the satellite images is added to the video stream.

The method may further comprise, at a receiving side, decoding the video stream and displaying the satellite images, in particular as a time series. Alternatively or additionally, the decoded satellite images and/or the video stream may be stored, in particular in the second data storage, for further processing.

The invention further provides a computer program product according to claim 12 comprising instructions, which, when the program is executed by a computer, cause the computer to carry out the above-described method.

The computer program product may be provided on a computer-readable data carrier and/or carried by a data carrier signal.

The invention further provides a system according to claim 13 for transmitting satellite image data via a data network comprising a first data storage for storing satellite image data corresponding to different acquisition times and/or different observed areas, a video codec for compressing selected satellite image data to be transferred via the data network based on a video coding format to form a video stream, and a transmitter for transmitting the video stream via the data network to a second data storage.

The system may comprise means for performing any of the above-described method steps.

The system may further comprise a receiver for receiving the video stream and a decoder for decoding, in particular decompressing, the video stream.

The invention further provides a use of a video codec according to claim 15 to compress satellite images based on a video coding format to form a video stream. The use may further comprise transmitting the video stream via a data network.

The use may comprise implementing one or more of the above-described method steps.

### Brief description of the drawings

Advantageous embodiments will now be described in combination with the enclosed figures.
- Figure 1: schematically shows an exemplary environment for transmitting satellite image data via a data network;
- Figure 2: illustrates data acquisition from an orbit over a segment of the earth surface;
- Figure 3: illustrates a segment of the earth surface with a fixed grid overlaid thereon;
- Figure 4: illustrates intersections of orbit-related data with a cell of the fixed grid of Figure 3;
- Figures 5A and 5B: illustrate possibilities of mapping sensor data in color channels of a video frame;
- Figures 6A and 6B: illustrate data gaps of frames and the possibility of filling gaps via interpo-lation;
- Figures 7A and 7B: illustrate an exemplary quality of compression of satellite data in a video stream;
- Figure 8: illustrates an exemplary method for transmitting satellite images via a data network; and
- Figure 9: illustrates an exemplary system for transmitting satellite images via a data network.

### Detailed description of the invention

Satellite sensor-data archives are huge in storage, complex in accessing on a large scale, often stored in old-fashioned containers (e.g., Zip-Files) and complex to combine to useful stacks of data for a given region.

Existing solutions are developed for experts of a small market of professionals.

Due to gaps in archives on typical data providers (e.g., the DIASes- Data and Information Access Service) data needs to be copied to a single operations infrastructure. Moving such huge satellite archives over limiting networks is one of the main bottlenecks in many operational services.

While the invention is applicable to all kinds of satellite imaginary, including astronomical satellite data, the following detailed description will focus on earth observation data. The satellite image data may have one or more of many applications, for instance in oceanography, fishing, agriculture, biodiversity conservation, forestry, landscape and/or geology.

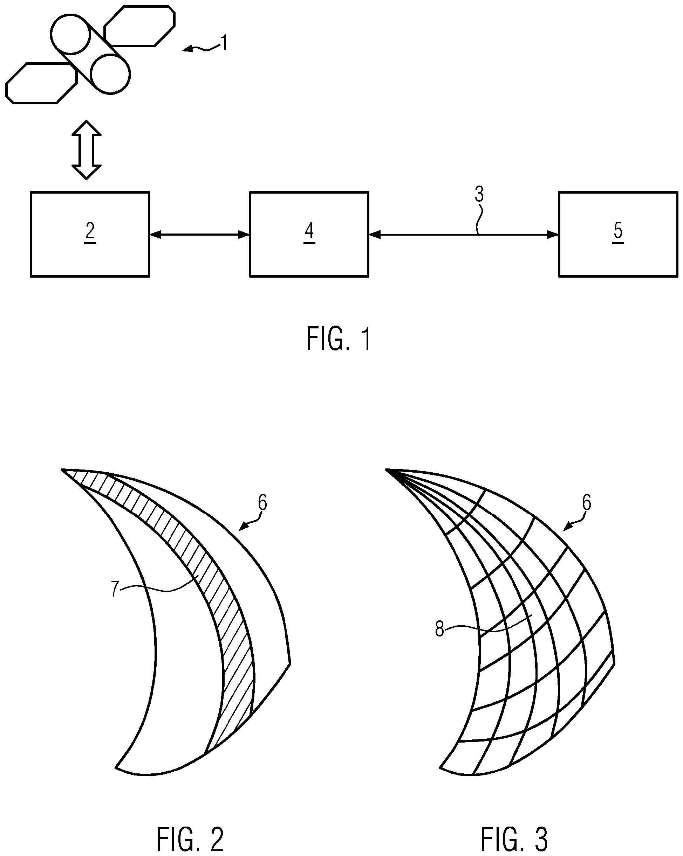

Figure 1 schematically shows an exemplary environment for transmitting satellite image data via a data network. An exemplary earth observation satellite 1 moves in a predetermined orbit and observes at least parts of the earth surface. The earth observation satellite 1 may be configured to periodically observe the same areas in a so-called monitoring mission.

The earth observation satellite 1 may comprise one or more image sensors corresponding to one or more frequency bands.

The raw satellite image data is transmitted to a ground segment 2 as indicated by the arrow in Fig.1.

At the ground segment 2, satellite sensor data is typically stored as georeferenced raster data in TIFF file containers. The known standard defines 150 requirements grouped into thirty-one requirements classes. These requirements address five standardization target types:
- Underlying TIFF requirements
- GeoTIFF configuration GeoKeys
- Raster to Model Coordinate Transformation requirements
- Requirements for definition of Model Coordinate Reference System (CRS) when the Model CRS is from GeoTIFF CRS register and
- Requirements for definition of user-defined Model CRS.

To conform to this standard, any software implementation shall comply with all the conformance classes. The values of the sensor arrays are stored in raster data values and are organized by software into two-dimensional arrays. The indices of the arrays being used as coordinates and different bands (represented by a raster) correspond to different ranges of wavelengths of electromagnetic radiation that produce a single response by a sensing device.

The most granular information is represented by a cell, a rectangular area in raster space, in which a single pixel value is filled.

Typically, these raster files are lossless compressed with compression algorithms such as JP2000 (Wavelet) or a LZW (Lempel-Ziv-Welch). These files are stored for each band and observation in a container format such as a zip container, together with metadata about mission, sensor and/or observation.

This satellite image data may then be provided in a data archive 4, where it is stored in a first data storage. The satellite image data may comprise the actual satellite images, in other words, the raster or pixel data values and the corresponding metadata, such as acquisition time and/or observed area.

The invention aims at improving the transmission of the satellite image data via a data network 3 to a target computer system 5, where the satellite image data shall be stored on a second data storage to allow for further processing and/or analysis. Alternatively or additionally, the satellite image data may be displayed as streaming media at the target computer system 5 using a display device.

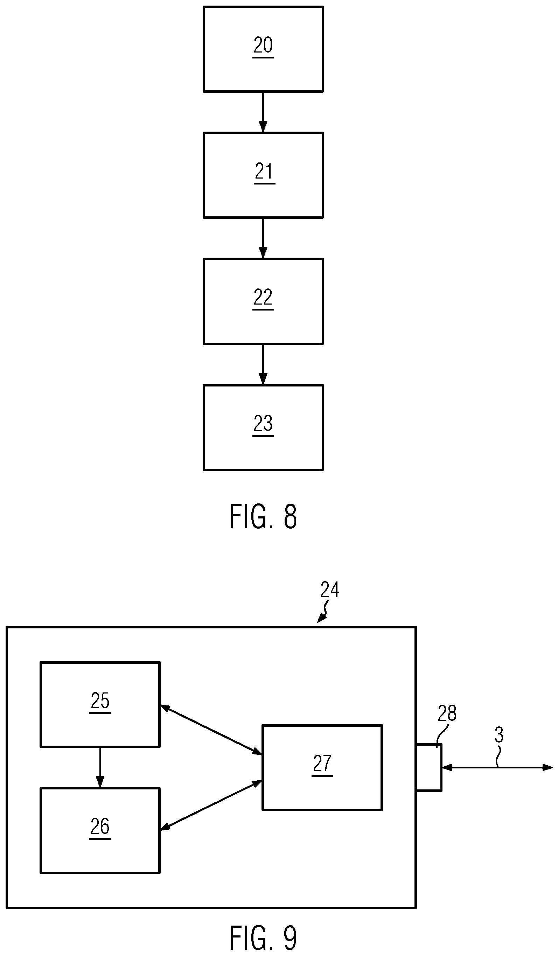

Particularly, an exemplary method for transmitting satellite image data via a data network will now be described with reference to Figure 8.

In step 20, satellite image data, in particular satellite images, corresponding to different acquisition times and/or different observed areas are stored in a first data storage, for instance in a first data storage of data archive 4 illustrated in Fig.1. The satellite image data, in particular satellite images, may be stored in the first data storage according to the known standard discussed above or in any other suitable way.

In step 21, satellite image data, in particular satellite images, to be transferred via the data network 3 may be selected. For instance, a user may specify an observation area of interest and a time range of interest. Based on the stored metadata, satellite images associated with the specified observation area of interest and time range of interest may be selected. In this way, particularly, a time series of observations of a particular area of the earth surface may be selected.

In step 22, the selected satellite image data, in particular satellite images, may be compressed, using a video codec, based on a video coding format to form a video stream. Forming the video stream may comprise forming a raw video bit stream by the compression algorithm and encapsulating the bit stream in a container format. Examples for suitable container formats are Matroska (.mkv), its derived WebM format (.webm) or the Indeo video file (IVF) format.

The video codec used may fulfill one or more of the following requirements:
- Support of 10/12 bit of bit depth to compress 16 bit raw material with very low loss
- Support of monochromatic and minimum three channels to be able to provide single band and RGB sensor imagery
- Support of lossless compression

Ideally, the video codec used may further fulfill one or more of the following requirements:
- Royalty free and open
- Supported by many Web browsers
- Hardware support on different architecture (e.g. from x86 to ARM and RISC flavor processors)
- Support of High Dynamic Range HRD support
- Support of a wide range of resolutions and framerate (e.g. 4K @ 30 Hz)

Among known codec solutions, for instance, the VP9 codec developed by Google LLC fulfills these requirements.

To be able to correlate the sequences of data to the geographic location and time of observation, the streams may be enriched with metadata with defined keywords. The metadata may be stored as a key-value section in the header of the stream. In particular, for each frame in the stream, the timestamp of data acquisitions (acquisition time) together with geometry bounding boxes and geometries in the case of multi-temporal pixels within one frame may be added.

The list of metadata is easy to expand with individual key-value pairs. In addition, a database with all metadata for the streams may be provided with an API to access the data if needed.

In step 23, the video stream is transmitted via the data network 3 to a second data storage, for instance on computing device 5 illustrated in Fig. 1. The data network 3 may particularly be the Internet. The computing device 5 may be any suitable device, such as a Smartphone, a Tablet, a Laptop, a Workstation or a server computer.

The described method steps will be further illustrated by reference to the remaining figures.

Figure 2 illustrates a segment 6 of the earth surface and a part of the observational swath or slice 7 of an exemplary earth observation satellite 1. Along the observational swath 7, images may be periodically obtained using one or more sensors of the earth observation satellite 1. Depending of the field of view of the sensor, each image may correspond to a predetermined area on the earth surface. The observational swath 7 may vary between different orbits of the earth observation satellite 1.

To relate the images obtained by the satellite 1 to a certain area on the earth surface, georeferencing is necessary. Figure 3 illustrates an exemplary fixed grid relative to the earth surface for relating the images obtained by the satellite 1 to geographic coordinates. The grid forms grid-granules such as exemplary granule 8 in Figure 3. The sensor data from the satellite is projected onto said grid, for instance at the ground segment 2. The grid may also be variable, for instance different for different observational swaths 7.

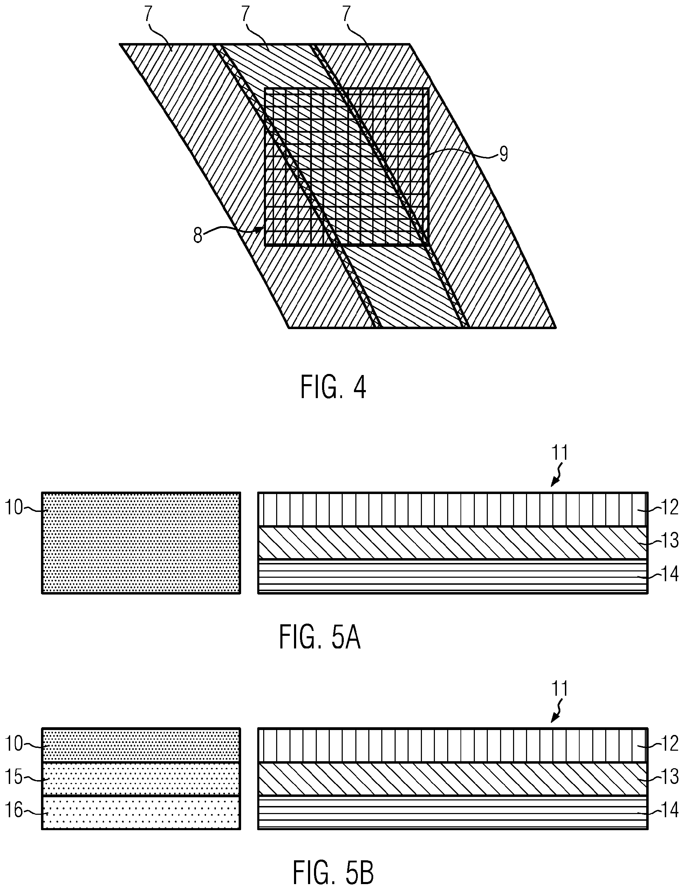

As shown in Figure 4, different observational swaths 7 may not cover each intersecting grid-granule 8 completely. In Figure 4, three observational swaths 7 from different orbits, i.e. relating to different acquisition times, are shown, intersecting a grid-granule 8. None of the observational swaths 7 covers the granule 8 completely. The most granular information is represented by a cell, i.e. a rectangular area in raster space, in which a single pixel value is filled. Since the observational swaths 7 do not cover the granule 8 completely, at each acquisition time, no-data values exist in the granule 8 for cells not covered by the respective observational swath 7. Thus, data gaps are formed.

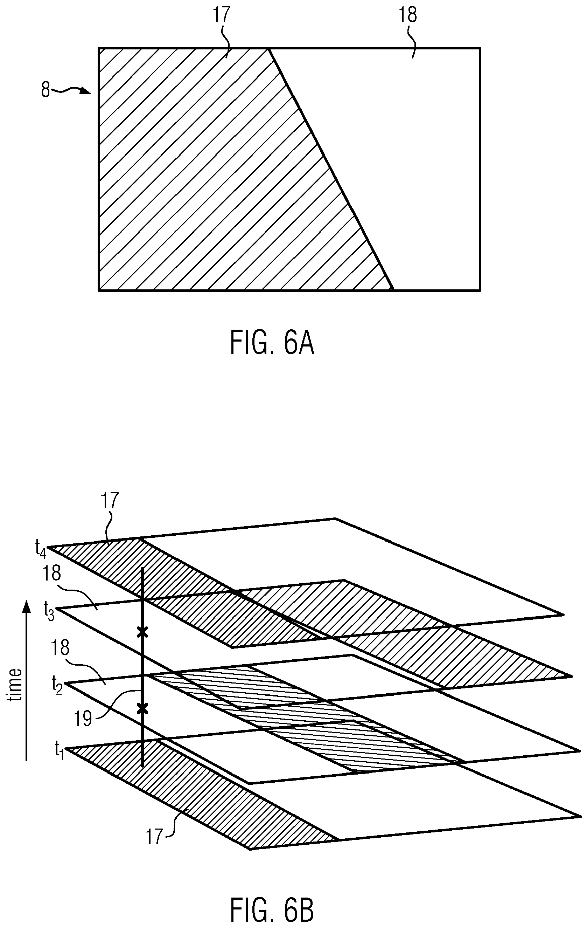

Such a data gap is illustrated in Figure 6A, which shows a granule 8 with a data area 17 containing data from the satellite sensor data and a data gap 18 containing no-data values.

The data gaps 18 may be filled with pixel values obtained based on earlier and/or later observations of the area corresponding to the data gaps. For instance, the pixel values of data gap 18 may be replaced by pixel values of the most recent observation containing data for that area. The most recent observation may be obtained from the selected time series.

Alternatively, the pixel values for the data gaps may be obtained by interpolation or extrapolation.

Figure 6B illustrates the alternative of interpolating pixel values for filling data gaps. A granule 8 is shown for different acquisition times t₁ - t₄. While for times t₁ and t₄ data is present for spatial areas 17, data gaps 18 are present for times t₂ and t₃. By a temporal interpolation illustrated by line 19, pixel values in the data gaps 18 may be obtained.

Prior to or after selecting the satellite image data, the satellite images may be projected into a predetermined reference system using a predetermined map projection, in particular wherein the predetermined reference system is selected based on the observation area of interest. This projection may be correspond to a further projection to the projection of the data to the fixed or variable grid mentioned above. Numerous different map projections are known. For instance, a Web-Mercator map projection may be used.

The satellite images, in particular as obtained after projection to the fixed or variable grid, and optionally after projection into a predetermined reference system and/or filling of the data gaps, may then be encoded in a video stream via a video codec.

Typically, the satellite data has a higher bit depth than supported by the video codec, e.g. 16 bit. Figure 5A illustrates one option to maintain the information from the sensor data. The video coding formats usually support three channels of a color space, for instance red, green and blue. Some video coding formats support further channels, such as Alpha-channels. The image data from one sensor spectral band 10 may be mapped into two or more such color channels, thereby maintaining the original data precision.

Alternatively or additionally, image data from separate sensor spectral bands may be mapped to respective color channels as shown in Figure 5B. Particularly, in Fig. 5B, image data corresponding to sensor spectral band 10 is mapped to the red channel 12, image data corresponding to sensor spectral band 15 is mapped to the green channel 13 and image data corresponding to sensor spectral band 16 is mapped to the blue channel 14. Thus, each frame of the video stream may comprise image data from one or more sensor spectral bands.

It is also possible to provide tailored satellite sensor-streams for different domains, such as agriculture. For this purpose, different sensor spectral bands may be combined to so-called indices. An index may, for instance, comprise a ratio of the pixel values for two different sensor spectral bands. In other words, an index again corresponds to a satellite image, however, with pixel values computed based on satellite images for different sensor spectral bands. An example of such an index is the NDVI (Normalized Difference Vegetation Index). The different indices may be mapped to the different channels as shown for the sensor bands 10, 15 and 16 in Figure 5B.

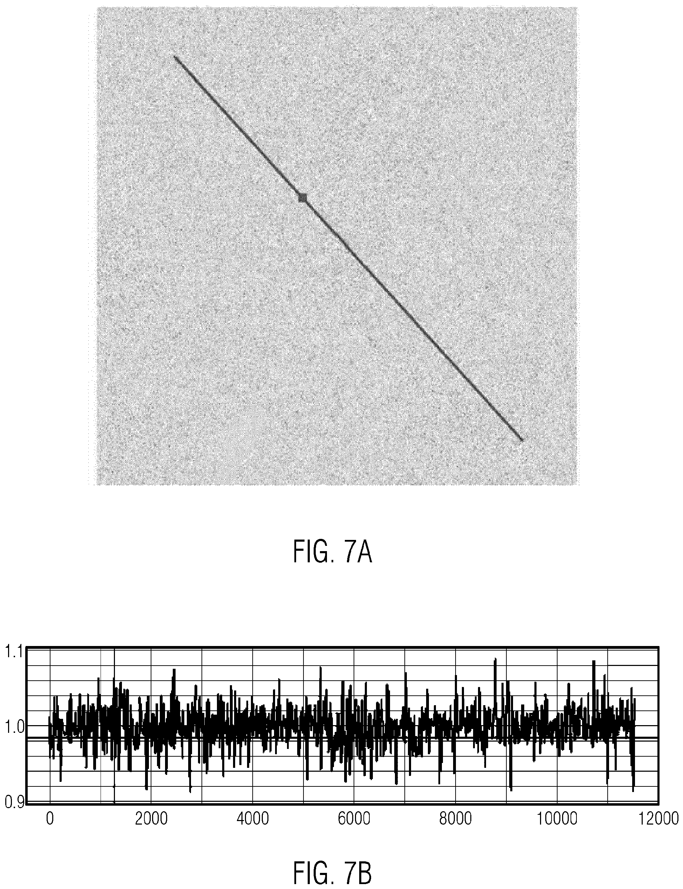

Figures 7A and 7B illustrate obtainable transmission qualities for satellite image video streams. One advantage of video streams is the possibility to offer different stream qualities for different purposes and/or different bandwidths. In contrast to video streaming for entertainment purposes, video streams for satellite images do not need 30 or 60 frames per second. In general, satellite image video streams can have 5 frames per second or less.

The main limiting factor is the amount of time/bandwidth a user is able to invest to download data for its applications or analysis. Therefore, different resolutions and compressions may be offered. For a fast scan of archive data, a low resolution (e.g., 2K with 30 frames per second) is possible, whereas for other applications a full resolution with low overall quality difference is needed.

In Figure 7A, an example of a division of two images (an original uncompressed and the same from a video stream with compression ratio of 1:17) is shown. The solid line indicates the pixels used for the plot in Figure 7B. Note that in this case the difference is less than 3%.

In principle compression rates in the range of 1:10 to 1:100 is possible, depending on the domain of usage. This leads to complete archive sizes of several 100 TBs to several 10 TBs for typical satellite missions. Thus, truly accessible and manageable satellite sensor data archives and mirrors around the world are possible and the video streams can be efficiently distributed even to regions with limited network bandwidths.

Figure 9 illustrates an exemplary system 24 for implementing a method as described herein.

The exemplary system 24 comprises a first data storage 25 for storing satellite images corresponding to different acquisition times and/or different observed areas. A hardware and/or software video codec 26 is provided for compressing selected satellite images to be transferred via the data network 3 based on a video coding format to form a video stream. A transmitter 27 is provided for transmitting the video stream via the data network 3 to a second data storage. A network interface 28 is shown in Figure 9 for connecting the system 24 to the data network 3.

The invention may be embodied in a client-server architecture. A possible configuration includes one or more clients that communicate with one or more servers. A client may be implemented in a computing device or client device as described below. A server may be implemented in a server device provided by a service provider and/or a cloud provider. The present disclosure is, however, not limited to these specific implementations.

It is understood that the service, i.e. the encoding and transmission of the video stream, may be provided by more than a single server or server device, but may itself rely on a distributed system architecture. The server may include for instance, a web server as a front end, an application server and a data base server. For simplicity, the remote entity providing the service, whether a single server or server device, a distributed or micro service based system, or the like will be referred to in the following as a service provider. Furthermore, the client is not limited to a single client or client device but may itself include a distributed system. The client may further act as a server itself in a distributed environment, for instance as an intermediary server. The term client is used herein to include any of the above-mentioned architectures and merely indicates that the entity, e.g. a client device, receives a service from a remote entity, e.g. a server device. With regard to other aspects than the provision and reception of the remote service, the client and the server may even switch roles.

The client and the service provider may be operatively connected to one or more respective client data stores and server data stores that can be employed to store information local to the respective client and server, such as application code, application data, input data, output data, authentication data, and the like. The data stores may comprise the first and second data storages disclosed herein.

The client and the service provider may communicate information between each other using a communication framework. The information may include authentication information such as keys and/or signatures for establishing a secure communication channel, one or more applications, e.g. as code or binaries, input data and/or configuration data for execution of the remote application, output data of the remote application, and the like. The information may further include keys and/or signatures for software attestation as described below. Furthermore, applications may be provided as interpreted code to be executed by an interpreter.

The communications framework used for communications between the client and the service provider may include the data network mentioned herein and may be implement any well-known communication techniques and protocols. The communications framework may be implemented as a packet-switched network (e.g., public networks such as the Internet, private networks such as an enterprise intranet, and so forth), a circuit-switched network (e.g., the public switched telephone network), or a combination of a packet-switched network and a circuit-switched network (with suitable gateways and translators). The client-server architecture may include various common communications elements, such as a transmitter, receiver, transceiver, radio, network interface, baseband processor, antenna, amplifiers, filters, power supplies, and so forth. The embodiments, however, are not limited to these implementations.

A communications network may be any one and the combination of wired and/or wireless networks including without limitation a direct interconnection, a secured custom connection, a private network (e.g., an enterprise intranet), a public network (e.g., the Internet), a Personal Area Network (PAN), a Local Area Network (LAN), a Metropolitan Area Network (MAN), an Operating Missions as Nodes on the Internet (OMNI), a Wide Area Network (WAN), a wireless network, a cellular network, and other communications networks.

As mentioned above, the client and the server may each include a device that may be any electronic device capable of receiving, processing, and sending information, e.g. through a communication component. Examples of a computing device or electronic device may include without limitation a client device, a personal digital assistant (PDA), a mobile computing device, a smart phone, a cellular telephone, ebook readers, a messaging device, a computer, a personal computer (PC), a desktop computer, a laptop computer, a notebook computer, a netbook computer, a handheld computer, a tablet computer, a server, a server array or server farm, a web server, a network server, an Internet server, a work station, a network appliance, a web appliance, a distributed computing system, a multiprocessor system, a processor-based system, consumer electronics, programmable consumer electronics, a game device, a television, a set top box, a wireless access point, a base station, a subscriber station, a mobile subscriber center, a radio network controller, a router, a hub, a gateway, a bridge, a switch, a machine, or a combination thereof. The embodiments are not limited in this context.

The device may execute processing operations or logic for the one or several applications such as the exemplary client application and the remote application, for a communications component, the operating system, in particular a kernel of the operating system, and for other software elements using one or more processing components, i.e. processing circuitry. The processing components or processing circuitry may comprise various hardware elements such as devices, logic devices, components, processors, microprocessors, circuits, processor circuits, circuit elements (e.g., transistors, resistors, capacitors, inductors, and so forth), integrated circuits, application specific integrated circuits (ASIC), programmable logic devices (PLD), digital signal processors (DSP), field programmable gate arrays (FPGA), memory units, logic gates, registers, semiconductor devices, chips, microchips, chip sets, and so forth. Examples of software elements may include software components, programs, applications, computer programs, application programs, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof.

The device may execute communications operations or logic for communications with other devices using one or more communications components. The communications components may implement any well-known communications techniques and protocols, such as techniques suitable for use with packet-switched networks (e.g., public networks such as the Internet, private networks such as an enterprise intranet, and so forth), circuit-switched networks (e.g., the public switched telephone network), or a combination of packet-switched networks and circuit-switched networks (with suitable gateways and translators). The communications component may include various types of standard communication elements, such as one or more communications interfaces, network interfaces, network interface cards (NIC), radios, wireless transmitters/receivers (transceivers), wired and/or wireless communication media, physical connectors, and so forth. By way of example, and not limitation, communication media include wired communications media and wireless communications media. Examples of wired communications media may include a wire, cable, metal leads, printed circuit boards (PCB), backplanes, switch fabrics, semiconductor material, twisted-pair wire, co-axial cable, fiber optics, a propagated signal, and so forth. Examples of wireless communications media may include acoustic, radio-frequency (RF) spectrum, infrared and other wireless media.

The device may be implemented in the form of a distributed system that may distribute portions of the above-described structure and/or operations across multiple computing entities. Examples of a distributed system may include without limitation a client-server architecture, a 3-tier architecture, an N-tier architecture, a tightly-coupled or clustered architecture, a peer-to-peer architecture, a master-slave architecture, a shared database architecture, and other types of distributed systems. The embodiments are not limited in this context.

The client and/or the server may include a computing architecture as described in the following. In one embodiment, the computing architecture may comprise or be implemented as part of an electronic device. Examples of an electronic device may include those described above. The embodiments are not limited in this context.

The computing architecture may include various common computing elements, such as one or more processors, multi-core processors, co-processors, memory units, chipsets, controllers, peripherals, interfaces, oscillators, timing devices, video cards, audio cards, multimedia input/output (I/O) components, power supplies, and so forth. The embodiments, however, are not limited to implementation by this computing architecture.

The computing architecture may comprise a processing unit, a system memory, and a system bus. The processing unit can be any of various commercially available processors. Dual microprocessors, multi-core processors, and other multi-processor architectures may also be employed as the processing unit.

The system bus provides an interface for system components including, but not limited to, the system memory to the processing unit. The system bus can be any of several types of bus structure that may further interconnect to a memory bus (with or without a memory controller), a peripheral bus, and a local bus using any of a variety of commercially available bus architectures. Interface adapters may connect to the system bus via a slot architecture. Example slot architectures may include without limitation Accelerated Graphics Port (AGP), Card Bus, (Extended) Industry Standard Architecture ((E)ISA), Micro Channel Architecture (MCA), NuBus, Peripheral Component Interconnect (Extended) (PCI(X)), PCI Express, Personal Computer Memory Card International Association (PCMCIA), and the like.

The computing architecture may comprise or implement a computer-readable storage medium to store logic. Examples of a computer-readable storage medium may include any tangible media capable of storing electronic data, including volatile memory or non-volatile memory, removable or non-removable memory, erasable or non-erasable memory, writeable or re-writeable memory, and so forth. Examples of logic may include executable computer program instructions implemented using any suitable type of code, such as source code, compiled code, interpreted code, executable code, static code, dynamic code, object-oriented code, visual code, and the like. Embodiments may also be at least partly implemented as instructions contained in or on a non-transitory computer-readable medium, which may be read and executed by one or more processors to enable performance of the operations described herein.

The system memory may include various types of computer-readable storage media in the form of one or more higher speed memory units, such as read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, an array of devices such as Redundant Array of Independent Disks (RAID) drives, solid state memory devices (e.g., USB memory, solid state drives (SSD)) and any other type of storage media suitable for storing information. The system memory can include non-volatile memory and/or volatile memory. A basic input/output system (BIOS) can be stored in the non-volatile memory.

The computing architecture may include various types of computer-readable storage media in the form of one or more lower speed memory units, including an internal (or external) hard disk drive (HDD), a magnetic floppy disk drive (FDD) to read from or write to a removable magnetic disk, and an optical disk drive to read from or write to a removable optical disk (e.g., a CD-ROM, DVD, or Blu-ray). The HDD, FDD and optical disk drive can be connected to the system bus by a HDD interface, an FDD interface and an optical drive interface, respectively. The HDD interface for external drive implementations can include at least one or both of Universal Serial Bus (USB) and IEEE 1394 interface technologies.

The drives and associated computer-readable media provide volatile and/or nonvolatile storage of data, data structures, computer-executable instructions, and so forth. For example, a number of program modules can be stored in the drives and memory units, including an operating system, in particular a kernel of an operating system, one or more application programs, also called applications herein, such as the exemplary client application and the exemplary remote application, other program modules, and program data. In one embodiment, the one or more application programs, other program modules, and program data can include, for example, the various applications and/or components to implement the disclosed embodiments.

A user can enter commands and information into the computing device through one or more wire/wireless input devices, for example, a keyboard and a pointing device, such as a mouse. Other input devices may include microphones, infra-red (IR) remote controls, radio-frequency (RF) remote controls, game pads, stylus pens, card readers, dongles, finger print readers, gloves, graphics tablets, joysticks, keyboards, retina readers, touch screens (e.g., capacitive, resistive, etc.), trackballs, trackpads, sensors, styluses, and the like. These and other input devices are often connected to the processing unit through an input device interface that is coupled to the system bus, but can be connected by other interfaces such as a parallel port, IEEE 1394 serial port, a game port, a USB port, an IR interface, and so forth.

A display device may also be connected to the system bus via an interface, such as a video adaptor. The display device may be internal or external to the computing device. In addition to the display device, a computing device typically includes other peripheral output devices, such as speakers, printers, and so forth.

Although the previously discussed embodiments and examples of the present invention have been described separately, it is to be understood that some or all of the above-described features can also be combined in different ways. The above-discussed embodiments are particularly not intended as limitations, but serve as examples, illustrating features and advantages of the invention.

## Claims

1. Computer-implemented method for transmitting satellite image data via a data network, comprising:
storing satellite image data corresponding to different acquisition times and/or different observed areas in a first data storage;
selecting satellite image data to be transferred via the data network;
compressing, using a video codec, the selected satellite image data based on a video coding format to form a video stream; and
transmitting the video stream via the data network to a second data storage.

2. The computer-implemented method according to claim 1, wherein selecting the satellite image data comprises selecting a time series of satellite images for a predetermined observation region of interest and/or selecting satellite images corresponding to a predetermined observation region of interest independent of the acquisition times of the satellite images.

3. The computer-implemented method according to claim 1 or 2, wherein compressing the selected satellite image data is based on a lossless compression algorithm or on a lossy compression algorithm using a selectable compression factor.

4. The computer-implemented method according to any one of the preceding claims, further comprising, for one or more frames of the video stream, mapping a satellite image corresponding to one sensor spectral band, to two or more channels of a color space provided for by the video coding format.

5. The computer-implemented method according to any one of the preceding claims, further comprising, for one or more frames of the video stream, mapping one or more satellite images corresponding to two or more sensor spectral bands, to respective two or more channels of a color space provided for by the video coding format.

6. The computer-implemented method according to any one of the preceding claims, further comprising computing one or more indices, each index being based on a combination of one or more satellite images and corresponding to two or more sensor spectral bands, and mapping the one or more indices to one or more respective channels of a color space provided for by the video coding format.

7. The computer-implemented method according to any one of the preceding claims, further comprising mapping satellite images originating from two or more different sensors, in particular of different satellite missions, to respective two or more channels of a color space provided for by the video coding format.

8. The computer-implemented method according to any one of the preceding claims, wherein compressing the selected satellite image data further comprises converting the selected satellite images having a first bit depth to image data having a second bit depth supported by the video coding format.

9. The computer-implemented method according to any one of the preceding claims, further comprising identifying data gaps in the selected satellite image data caused by projecting the satellite sensor data onto a fixed or variable grid relative to the earth surface and replacing the no-data values in the data gaps by pixel values obtained based on earlier and/or later observations of the area corresponding to the data gaps.

10. The computer-implemented method according to any one of the preceding claims, wherein prior to or after selecting the satellite image data, the method further comprises projecting the satellite images into a predetermined reference system using a predetermined map projection, in particular wherein the predetermined reference system is selected based on the observation area of interest.

11. The computer-implemented method according to any one of the preceding claims, further comprising adding metadata relating to observation parameters of the satellite images to the video stream.

12. A computer program product comprising instructions which, when the program is executed by a computer, cause the computer to carry out the method of any one of the preceding claims.

13. System for transmitting satellite image data via a data network comprising:
a first data storage for storing satellite image data corresponding to different acquisition times and/or different observed areas;
a video codec for compressing selected satellite image data to be transferred via the data network based on a video coding format to form a video stream; and
a transmitter for transmitting the video stream via the data network to a second data storage.

14. The system according to claim 13, further comprising:
a receiver for receiving the video stream and storing it in the second data storage; and
a decoder for decoding the video stream.

15. Use of a video codec to compress satellite image data based on a video coding format to form a video stream.
